# EUROPÄISCHE PATENTSCHRIFT

(11) **EP 3 298 477 B1**
(45) Veröffentlichungstag und Bekanntmachung des Hinweises auf die Patenterteilung: **24.07.2019**
(21) Anmeldenummer: 16724031.6
(22) Anmeldetag: 19.05.2016
(51) Int. Cl.: G06F 3/01

(54) **VERFAHREN ZUM BETREIBEN EINER BEDIENVORRICHTUNG SOWIE BEDIENVORRICHTUNG FÜR EIN KRAFTFAHRZEUG**
METHOD FOR OPERATING AN OPERATING DEVICE, AND OPERATING DEVICE FOR A MOTOR VEHICLE
PROCÉDÉ DE FONCTIONNEMENT D'UN DISPOSITIF DE COMMANDE AINSI QUE DISPOSITIF DE COMMANDE POUR UN VÉHICULE AUTOMOBILE

(30) Priorität: 21.05.2015 DE 102015006614
(43) Veröffentlichungstag der Anmeldung: 28.03.2018
(73) Patentinhaber: Audi AG, 85045 Ingolstadt (DE)
(72) Erfinder: SPRICKMANN KERKERINCK, Paul, 85051 Ingolstadt (DE); DI FRANCO, Onofrio, 71254 Ditzingen (DE)
(86) Internationale Anmeldenummer: PCT/EP2016/061286
(87) Internationale Veröffentlichungsnummer: WO 2016/184971

(56) Entgegenhaltungen:
- WO-A1-2011/085815
- US-A1- 2008 120 577
- US-A1- 2012 121 185
- US-A1- 2015 089 453

## Beschreibung

Die Erfindung betrifft ein Verfahren zum Betreiben einer Bedienvorrichtung eines Kraftfahrzeugs, bei welchem mittels einer Erfassungseinrichtung der Bedienvorrichtung berührungslos eine Bediengeste eines Nutzers sowie zumindest eine räumliche Position, an welcher die Bediengeste durchgeführt wird, erfasst werden, und daraufhin eine Funktion des Kraftfahrzeugs in Abhängigkeit der Bediengeste gesteuert wird, falls erfasst wurde, dass die zumindest eine räumliche Position innerhalb eines vorbestimmten Interaktionsraumes liegt. Die Erfindung betrifft außerdem eine Bedienvorrichtung eines Kraftfahrzeugs.

Bedienvorrichtungen sind in vielfältiger Weise aus dem Stand der Technik bekannt. Solche Bedienvorrichtungen können beispielsweise, wie in der DE 10 2011 102 038 A1 beschrieben, zum Steuern eines Heimautomatisierungssystems verwendet werden. Auch können Bedienvorrichtungen in Kraftfahrzeugen vorgesehen sein, um beispielsweise ein Infotainmentsystem oder andere Funktionen des Kraftfahrzeugs steuern zu können. Dass solche Bedienvorrichtungen auch mittels Bediengesten, welche eine Person beispielsweise mit ihren Händen durchführt, zum Steuern der Funktionen betrieben werden können, ist ebenfalls bereits aus dem Stand der Technik bekannt. Ein Verfahren zur Erkennung von Bediengesten ist dabei beispielsweise in der DE 102 33 233 A1 offenbart. Darüber hinaus zeigt die US 2015/0025740 A1, dass eine Gestensteuerung zum Steuern von Funktionen eines Kraftfahrzeugs aktiviert werden kann, indem eine Bediengeste innerhalb eines gültigen Erfassungsbereiches erfasst wird. Die US 2012/0121185 A1 offenbart eine Gestensteuerung bei der Bediengesten im Raum erkannt werden und ein Interaktionsraum durch eine statische Geste festgelegt wird.

Dieser gültige Erfassungsbereich ist üblicherweise ein vorbestimmter Interaktionsraum, innerhalb welchem die Bediengesten zum Steuern der Funktionen ausgeführt werden sollen, um beispielsweise ein versehentliches beziehungsweise ungewolltes Steuern der Funktionen zu verhindern. Dabei kann es sein, dass dieser vorbestimmte Interaktionsraum nicht für jeden Fahrzeuginsassen beziehungsweise jeden Nutzer gleichermaßen geeignet ist, da der vorbestimmte Interaktionsraum beispielsweise aufgrund der aktuellen Sitzposition des Nutzers außerhalb dessen Reichweite liegt.

Es ist Aufgabe der vorliegenden Erfindung, eine Lösung aufzuzeigen, wie Funktionen eines Kraftfahrzeugs mittels einer Bedienvorrichtung nutzerspezifisch und dabei besonders zuverlässig gesteuert werden können.

Diese Aufgabe wird erfindungsgemäß durch ein Verfahren zum Betreiben einer Bedienvorrichtung sowie eine Bedienvorrichtung mit den Merkmalen gemäß den unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Betreiben einer Bedienvorrichtung eines Kraftfahrzeugs, mittels welcher Funktionen des Kraftfahrzeugs steuerbar sind. Bei dem Verfahren werden mittels einer Erfassungseinrichtung der Bedienvorrichtung eine Bediengeste eines Nutzers sowie zumindest eine räumliche Position, in welcher die Bediengeste durchgeführt wird, berührungslos erfasst und daraufhin eine Funktion des Kraftfahrzeugs in Abhängigkeit der Bediengeste betrieben, falls erfasst wurde, dass die zumindest eine räumliche Position innerhalb eines vorbestimmten Interaktionsraumes liegt. Darüber hinaus wird zum Bestimmen des Interaktionsraumes eine durch den Nutzer durchgeführte vorbestimmte Bestimmungsgeste erkannt, zumindest eine Position, an welcher die Bestimmungsgeste durchgeführt wird, erfasst und die zumindest eine erfasste Position der Bestimmungsgeste als eine Koordinate des Interaktionsraumes festgelegt.

Mittels der Bedienvorrichtung können beispielsweise ein Infotainmentsystem, beispielsweise Funktionen eines Tablets des Kraftfahrzeugs, aber auch andere Funktionen, beispielsweise Funktionen eines Fensterhebers oder einer Beleuchtungseinrichtung des Kraftfahrzeugs, mittels Bediengesten des Nutzers gesteuert werden. Die Bedienvorrichtung weist dazu die Erfassungseinrichtung auf, welche insbesondere in einem Innenraum beziehungsweise einer Fahrgastzelle des Kraftfahrzeugs angeordnet ist und die Bediengeste des Nutzers, welcher sich in der Fahrgastzelle befindet, mittels einer geeigneten Sensorik erfasst. Eine solche Erfassungseinrichtung kann beispielsweise eine 2D- oder 3D-Kamera sein. Durch die von der Erfassungseinrichtung erfasste Bediengeste des Nutzers wird aber nur dann eine Funktionssteuerung oder Funktionsauslösung bewirkt, falls die Bediengeste durch den Nutzer innerhalb des vorbestimmten Interaktionsraumes beziehungsweise Bedienraumes durchgeführt wird, also falls durch die Erfassungseinrichtung erfasst wurde, dass die zumindest eine erfasste Position der Bediengeste innerhalb des Interaktionsraumes liegt.

Erfindungsgemäß ist es nun vorgesehen, dass der Interaktionsraum durch den Nutzer selbst definiert beziehungsweise bestimmt werden kann. Dazu führt der Nutzer die vorbestimmte Bestimmungsgeste durch, welche durch die Erfassungseinrichtung erfasst und erkannt wird. Dabei wird, beispielsweise durch eine Steuereinrichtung, die zumindest eine Koordinate des Interaktionsraumes als diejenige Position festgelegt, an welcher der Nutzer die Bestimmungsgeste durchführt. Dies bedeutet, dass in einem gemeinsamen Koordinatensystem, beispielsweise im Innenraum des Kraftfahrzeugs, die zumindest eine Koordinate des Interaktionsraumes und die zumindest eine Position der Bestimmungsgeste identisch sind. Anders ausgedrückt, kann der Nutzer den Ort seines persönlichen Interaktionsraumes durch den Ort der durch ihn durchgeführten Bestimmungsgeste selbst bestimmen. Der Interaktionsraum kann beispielsweise in einer Speichereinrichtung der Bedienvorrichtung hinterlegt werden. Bei folgenden, von der Erfassungseinrichtung erfassten Bediengesten des Nutzers kann dann, beispielsweise von der Steuereinrichtung der Bedienvorrichtung, überprüft werden, ob die Bediengesten innerhalb des durch den Nutzer definierten Interaktionsraumes durchgeführt werden.

Somit kann in vorteilhafter Weise der Nutzer beziehungsweise der Fahrzeuginsasse, beispielsweise abhängig von seiner aktuellen Sitzposition im Innenraum des Kraftfahrzeugs, einen für ihn geeigneten Interaktionsraum definieren und dadurch Funktionen des Kraftfahrzeugs einfach und zuverlässig steuern.

Erfindungsgemäß wird die Interaktionsraumbestimmung aktiviert, sobald eine vorbestimmte Aktivierungslage zweier Hände des Nutzers erkannt wird. Als die Bestimmungsgeste wird eine vorbestimmte Relativbewegung der Hände von der Aktivierungslage in eine Endlage der Hände zueinander erfasst und als die zumindest eine Position die Positionen der Hände bei der Durchführung der Relativbewegung erfasst. Dabei werden die Positionen der Hände in der Endlage als Koordinaten von äußeren Begrenzungen des Interaktionsraumes festgelegt. Zum Initiieren beziehungsweise Aktivieren der Interaktionsraumbestimmung bringt der Nutzer also seine Hände in die vorbestimmte Aktivierungslage, welche von der Erfassungseinrichtung als solche erkannt wird. Von dieser Aktivierungslage aus bewegt der Nutzer seine Hände entsprechend der vorbestimmten Relativbewegung relativ zueinander. Der Nutzer führt die vorbestimmte Relativbewegung so lange durch, bis seine Hände die, von dem Nutzer selbst bestimmbare Endlage innehaben. Dabei werden von der Erfassungseinrichtung die Positionen der Hände beim Durchführen der Relativbewegung, insbesondere die Endpositionen der Hände in der Endlage, erfasst. An die Endpositionen werden die äußeren Begrenzungen des Interaktionsraumes gesetzt. Somit kann der Nutzer in vorteilhafter Weise nicht nur einen Ort des Interaktionsraumes, sondern auch eine Größe beziehungsweise eine räumliche Ausdehnung des Interaktionsraumes festlegen, je nachdem, wo er seine Hände in der Endlage positioniert.

Gemäß der Erfindung wird als die vorbestimmte Relativbewegung ein Auseinanderführen der Hände entlang einer ersten Raumrichtung von der Aktivierungslage, in welcher die Hände einen ersten Abstand zueinander aufweisen, in die Endlage, in welcher die Hände einen im Vergleich zum ersten Abstand größeren zweiten Abstand aufweisen, erfasst. Eine durch die Position der Hände in der Endlage begrenzte erste räumliche Ausdehnung des Interaktionsraumes weist dabei den zweiten Abstand auf. Durch das Auseinanderführen der Hände spannt der Nutzer also einen Bereich zwischen seinen Händen auf und bestimmt durch die Endpositionen seiner Hände die erste räumliche Ausdehnung des Interaktionsraumes in der ersten Raumrichtung. Eine solche, zum Definieren des Interaktionsraumes vorbestimmte Relativbewegung ist besonders intuitiv und daher einfach für den Nutzer durchführbar. Durch das durch den Nutzer optisch und haptisch wahrnehmbare Auseinanderführen seiner Hände wird dem Nutzer dabei eine Lage und eine Dimensionierung des Interaktionsraumes deutlich bewusst gemacht.

Vorzugsweise wird für eine zweite räumliche Ausdehnung des Interaktionsraumes in einer senkrecht zur ersten Raumrichtung orientierten zweiten Raumrichtung der zweite Abstand festgelegt und für eine dritte räumliche Ausdehnung des Interaktionsraumes in einer senkrecht zu der ersten und der zweiten Raumrichtung orientierten dritten Raumrichtung der zweite Abstand festgelegt. Die räumlichen Ausdehnungen in allen drei Raumrichtungen werden also, beispielsweise durch die Steuereinrichtung, auf den von der Erfassungseinrichtung erfassten zweiten Abstand festgelegt. Anders ausgedrückt bedeutet dies, dass der Nutzer seine Hände entlang der ersten Raumrichtung bis zum dem zweiten Abstand auseinanderführt und damit nicht nur die räumliche Ausdehnung in der ersten Raumrichtung, sondern auch die räumlichen Ausdehnungen in der zweiten und der dritten Raumrichtung bestimmt. Der Nutzer kann also die räumlichen Dimensionen des gesamten Interaktionsraumes mittels einer einzigen Relativbewegung seiner Hände festlegen. Wenn der Nutzer seine Hände beispielsweise in einer horizontalen Raumrichtung als die erste Raumrichtung auseinanderführt, so bestimmt er damit einen Wert einer Breite des Interaktionsraumes. Gleichzeitig werden dadurch auch eine Höhe und eine Tiefe des Interaktionsraumes festgelegt und, beispielsweise von der Steuereinrichtung, auf den Wert der Breite festgesetzt. Mit anderen Worten bedeutet dies, dass der Nutzer beispielsweise einen Kubus beziehungsweise einen Würfel mit seinen Händen aufzieht, wobei die Positionen der Hände in der Aktivierungslage innerhalb des Kubus, insbesondere im Bereich des Mittelpunkts des Kubus, liegen. Die Definition des Interaktionsraumes ist also besonders einfach für den Nutzer gestaltet.

Gemäß einer Ausführungsform der Erfindung wird als die Aktivierungslage eine Berührung von Handflächen der Hände erkannt. Zum Definieren des Interaktionsraumes kann der Nutzer beispielsweise seine sich berührenden Handflächen in der horizontalen Raumrichtung als die erste Raumrichtung auseinanderziehen. Alternativ oder zusätzlich wird als die Aktivierungslage ein Berühren zumindest zweier Finger der einen Hand mit zumindest zwei Fingern der anderen Hand erkannt. Dazu kann der Nutzer beispielsweise mit dem Zeigefinger der einen Hand den Daumen der anderen Hand und mit dem Daumen der einen Hand den Zeigefinger der anderen Hand berühren. Anders ausgedrückt formt der Nutzer mit seinen Zeigefingern und seinen Daumen ein Rahmen, wobei er zum Definieren des Interaktionsraumes seine Hände in eine diagonale Richtung als die erste Raumrichtung auseinanderführen kann. Damit wird, beispielsweise von der Steuereinrichtung, die räumliche Ausdehnung des Interaktionraumes sowie dessen Koordinaten durch die Länge der Diagonalen sowie die Positionen der Hände in der Endlage bestimmt. Solche Aktivierungslagen sind einerseits für den Nutzer besonders einfach durchzuführen und entsprechen andererseits in der Regel keiner zufälligen, durch den Nutzer durchgeführten Bewegung. Somit kann durch die Bedienvorrichtung ein Vorhaben des Nutzers zur Interaktionsraumbestimmung besonders zuverlässig erkannt werden.

Eine vorteilhafte Ausführungsform der Erfindung sieht vor, dass dem Nutzer auf einer Anzeigeeinrichtung der Bedienvorrichtung bildhaft die zum Festlegen des Interaktionsraumes durchzuführende Bestimmungsgeste angezeigt wird. Anders ausgedrückt, wird dem Nutzer also eine Anleitung dazu gegeben, wie er sich seinen persönlichen Interaktionsraum definieren kann. Dazu kann auf der Anzeigeeinrichtung, welche in Form von einem Bildschirm im Innenraum des Kraftfahrzeugs angeordnet sein kann, beispielsweise eine Filmsequenz angezeigt werden, welche eine Person oder nur die Hände einer Person beim Durchführen der Bestimmungsgeste zeigt. Mittels der Anzeigeeinrichtung kann dem Nutzer eine besonders kundenfreundliche Interaktionsraumbestimmung ermöglicht werden.

Auch kann es vorgesehen sein, dass dem Nutzer auf der Anzeigeeinrichtung eine optische Rückmeldung beziehungsweise ein visuelles Feedback darüber gegeben wird, ob der Vorgang der Interaktionsraumbestimmung funktioniert hat, also ob die Erfassungseinrichtung die vorbestimmte Bestimmungsgeste erkannt und den Interaktionsraum korrekt festgelegt hat, oder ob der Vorgang wiederholt werden muss. Auch kann dem Nutzer auf der Anzeigeeinrichtung oder mittels einer anderen Signalausgabeeinrichtung des Kraftfahrzeugs ein Signal ausgegeben werden, ob sich die Hände des Nutzers beim Durchführen der Bediengesten zum Steuern der Funktionen des Kraftfahrzeugs innerhalb des durch ihn definierten Interaktionsraumes befinden.

In einer Ausgestaltung der Erfindung wird ein unmittelbar an den Interaktionsraum angrenzender Toleranzbereich festgelegt. Dabei wird die Funktion auch dann gesteuert, falls die Bediengeste innerhalb des Interaktionsraumes und/oder innerhalb des Toleranzbereiches durchgeführt wird. Dies ist besonders vorteilhaft, da der Nutzer auch dann Funktionen des Kraftfahrzeugs mittels der Bedienvorrichtung bedienen kann, wenn er sich der durch ihn definierten exakten Größe des Interaktionsraumes oder dessen genauer Lage nicht mehr bewusst ist und somit versehentlich seine Bediengesten nahe außerhalb des Interaktionsraumes ausführt.

Vorzugsweise wird bei der Erfassung einer weiteren Bestimmungsgeste ein neuer Interaktionsraum bestimmt. Dabei wird die Funktion des Kraftfahrzeugs nur gesteuert, wenn die Bediengeste in dem neuen Interaktionsraum durchgeführt wird. Dies bedeutet, dass ein zuvor durch den Nutzer bestimmter Interaktionsraum mittels Durchführung einer neuen Bestimmungsgeste überschrieben werden kann. Dies ist besonders vorteilhaft, wenn der Nutzer beispielsweise seine Sitzposition geändert hat und die Lage und/oder Dimensionierung des zuvor bestimmten Interaktionsraumes für den Nutzer in der neuen Sitzposition nicht mehr geeignet ist. Der Nutzer kann somit beispielsweise zu jeder Sitzposition denjenigen Interaktionsraum definieren, in welchem er komfortabel Agieren und Funktionen des Kraftfahrzeugs steuern kann.

Auch kann vorgesehen sein, dass zum Bereitstellen eines personalisierten Interaktionsraumes zusätzlich zur Bestimmungsgeste der die Bestimmungsgeste durchführenden Nutzer erfasst wird und für jeden Nutzer der durch ihn bestimmte, personalisierte Interaktionsraum zum Steuern der Funktionen gespeichert wird. Es kann also für jeden Nutzer des Kraftfahrzeugs ein eigener Interaktionsraum erfasst und beispielsweise auf einer Speichereinrichtung der Bedienvorrichtung hinterlegt werden. Der personalisierte Interaktionsraum kann dann für den entsprechenden, durch die Erfassungseinrichtung erkannten Nutzer bereitgestellt werden.

Die Erfindung betrifft außerdem eine Bedienvorrichtung für ein Kraftfahrzeug zum Steuern von Funktionen des Kraftfahrzeugs mit einer Erfassungseinrichtung zum berührungslosen Erfassen einer Bediengeste eines Nutzers sowie zumindest einer räumlichen Position der Bediengeste und mit einer Steuereinrichtung zum Steuern einer der Funktionen in Abhängigkeit der durchgeführten Bediengeste, wobei die Steuereinrichtung dazu ausgelegt ist, die Funktion nur zu steuern, falls die zumindest eine durch die Erfassungseinrichtung erfasste Position innerhalb eines vorbestimmten Interaktionsraums liegt. Darüber hinaus ist die Erfassungseinrichtung dazu ausgelegt, eine durch den Nutzer durchgeführte, vorbestimmte Bestimmungsgeste zum Bestimmen des Interaktionsraumes zu erkennen und zumindest eine Position, an welcher die Bestimmungsgeste durchgeführt wird, zu erfassen. Die Steuereinrichtung ist dazu ausgelegt, die zumindest eine erfasste Position der Bestimmungsgeste als eine Koordinate des Interaktionsraumes festzulegen.

Die mit Bezug auf das erfindungsgemäße Verfahren vorgestellten bevorzugten Ausführungsformen und deren Vorteile gelten entsprechend für die erfindungsgemäße Bedienvorrichtung.

Im Folgenden wird die Erfindung nun anhand eines Ausführungsbeispiels wie auch unter Bezugnahme auf die beigefügten Zeichnungen näher erläutert.

Es zeigen:
- Fig. 1: eine schematische Darstellung eines Kraftfahrzeugs mit einer Ausführungsform einer erfindungsgemäßen Bedienvorrichtung;
- Fig. 2a: eine schematische Darstellung einer Aktivierungslage zweier Hände bei einer Bestimmungsgeste; und
- Fig. 2b: eine schematische Darstellung einer Endlage zweier Hände bei einer Bestimmungsgeste.

In den Figuren sind gleiche sowie funktionsgleiche Elemente mit den gleichen Bezugszeichen versehen.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und dabei auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

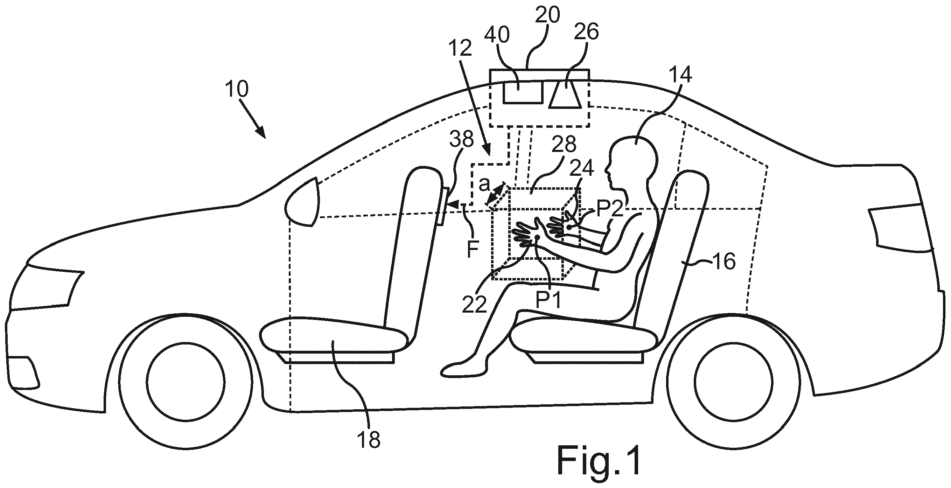

Fig. 1 zeigt ein Kraftfahrzeug 10 mit einer Bedienvorrichtung 20, mittels welcher ein Nutzer 14 eine Funktion F des Kraftfahrzeugs 10 steuern kann. Der Nutzer 14 ist hier in einem Innenraum 12 des Kraftfahrzeugs 10 auf einem Rücksitz 16 des Kraftfahrzeugs 10, insbesondere in einer bequemen, zurückgelehnten Sitzposition, sitzend dargestellt. Die zu steuernde Funktion F ist hier eine Funktion einer Anzeigeeinrichtung 38, beispielsweise in Form von einem Tablet oder einem berührungssensitiven Bildschirm, welcher an einer Rückenlehne eines Vordersitzes 18 des Kraftfahrzeugs 10 angeordnet ist und insbesondere außerhalb einer Reichweite des Nutzers 14 liegt. Anders ausgedrückt, kann der Nutzer 14 die Funktion F des berührungssensitiven Bildschirms nicht durch Berühren des berührungssensitiven Bildschirms steuern. Der Nutzer 14 kann die Funktion F des Kraftfahrzeugs 10 aber auch berührungslos mittels Bediengesten steuern, welche der Nutzer 14 mit seinen Händen 22, 24 durchführt. Zum Erfassen der Bediengesten des Nutzers 14 sowie zum Erfassen von zumindest einer Position der Hände 22, 24 des Nutzers 14 weist die Bedienvorrichtung 20 eine Erfassungseinrichtung 26, beispielsweise in Form von einer sogenannten Time-of-Flight-Kamera, auf. Um ein ungewolltes Fehlauslösen oder eine Fehlsteuerung der Funktion F zu vermeiden, ist eine Steuereinrichtung 40 der Bedienvorrichtung 20 dazu ausgelegt, die Funktion F nur dann zu steuern, wenn von der Erfassungseinrichtung 26 erfasst wurde, dass die Bediengesten des Nutzers 14 innerhalb eines vorbestimmten Interaktionsraum 28 durchgeführt wurden.

Dabei ist es vorgesehen, dass der Nutzer 14 den Interaktionsraum 28, insbesondere eine Lage sowie eine Dimensionierung des Interaktionsraumes 28 innerhalb des Innenraumes 12 des Kraftfahrzeugs 10, selbst definieren beziehungsweise bestimmen kann. So kann der Nutzer 14, beispielsweise in Abhängigkeit seiner Sitzposition, den Interaktionsraum 28 so bestimmen, dass er Bediengesten zum Steuern der Funktion F bequem und einfach innerhalb des Interaktionsraumes 28 durchführen kann. Dazu führt der Nutzer 14 eine vorbestimmte Bestimmungsgeste mit seinen Händen 22, 24 durch, welche von der Erfassungseinrichtung 26 erfasst und als solche erkannt wird. Zusätzlich wird zumindest eine Position der Bestimmungsgeste beziehungsweise zumindest eine Position der Hände 22, 24 des Nutzers 14 beim Durchführen des Bestimmungsgeste erfasst und, beispielsweise von der Steuereinrichtung 40 der Bedienvorrichtung 20, als eine Koordinate des Interaktionsraumes 28 festgelegt.

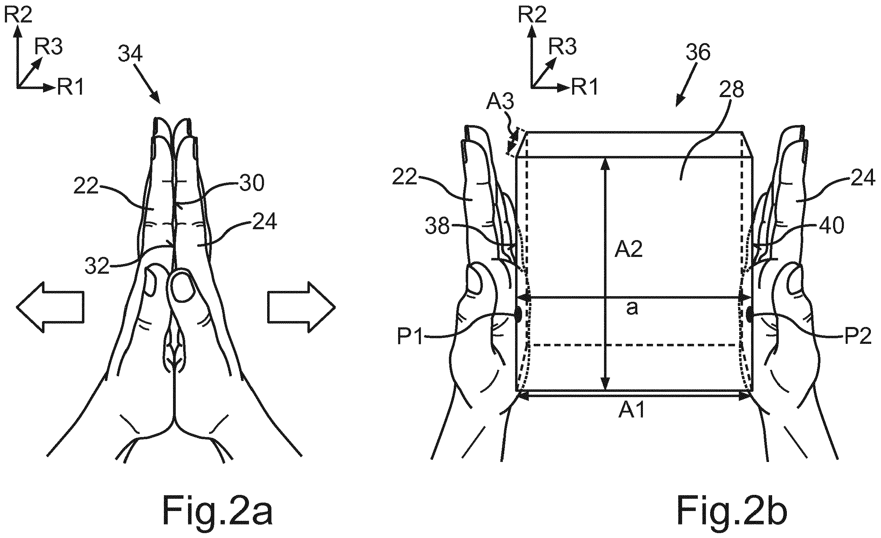

Zum Initialisieren der Bestimmung des Interaktionsraumes 28 wird von der Erfassungseinrichtung 26 eine vorbestimmte Aktivierungslage 34 der Hände 22, 24 des Nutzers 14 erkannt. Eine Ausführungsform der vorbestimmten Aktivierungslage 34 ist anhand der in Fig. 2a dargestellten Hände 22, 24 visualisiert. Eine solche Aktivierungslage 34 kann beispielsweise durch ein Berühren von Handflächen 30, 32 der Hände 22, 24 des Nutzers 14 eingenommen werden. Von dieser Aktivierungslage 34 aus bewegt der Nutzer 14 nun seine Hände 22, 24 entsprechend einer vorbestimmten Relativbewegung. Als eine solche vorbestimmte Relativbewegung kann ein Auseinanderführen der Hände 22, 24 entlang einer ersten Raumrichtung R1, beispielsweise entlang einer horizontalen Raumrichtung, von der Erfassungseinrichtung 26 erkannt werden. Die Relativbewegung der Hände 22, 24 wird bis zu einer Endlage 36 der Hände 22, 24 durchgeführt. Eine Ausführungsform einer Endlage 36 der Hände 22, 24 ist anhand der in Fig. 2b dargestellten Hände 22, 24 gezeigt.

In der Endlage 36 gemäß Fig. 2b weisen die Hände 22, 24 einen Abstand a zueinander auf, welcher durch den Nutzer 14 frei bestimmbar ist. Durch diesen Abstand a wird eine erste räumliche Ausdehnung A1 des Interaktionsraumes 28 entlang der ersten Raumrichtung R1 bestimmt. Außerdem kann vorgesehen sein, dass eine zweite räumliche Ausdehnung A2 in einer senkrecht zur ersten Raumrichtung R1 orientierten zweiten Raumrichtung R2 und eine dritte räumliche Ausdehnung A3 in einer senkrecht zur ersten Raumrichtung R1 und senkrecht zur zweiten Raumrichtung R2 orientierten dritten Raumrichtung R3 auch mit dem Abstand a, beispielsweise von der Steuereinrichtung 40, festgelegt werden. Durch das Auseinanderführen der Hände 22, 24 wird damit also ein gedachter Kubus aufgezogen, welcher beispielsweise von der Steuereinrichtung 40 als nutzerspezifischer Interaktionsraum 28 bestimmt und, beispielsweise in einer nicht dargestellten Speichereinrichtung der Bedienvorrichtung 20, hinterlegt wird.

Außerdem werden von der Erfassungseinrichtung 26 Positionen erfasst, welche die Hände 22, 24 beim Durchführen der Relativbewegungen innehaben. In Fig. 2b sind beispielsweise die Endpositionen P1, P2 der Hände 22, 24 gezeigt, wobei die Hand 22 in der Endlage der Hände 22, 24 die Position P1 innehat und die Hand 24 in der Endlage der Hände 22, 24 die Position P2 innehat. Die Positionen P1, P2 werden dabei als Koordinaten einer äußeren Begrenzung des Interaktionsraumes 28 definiert. In einem festen Koordinatensystem im Innenraum 12 des Kraftfahrzeugs 10 sind dabei die Position P1, P2 der Hände 22, 24 mit den Koordinaten der äußeren Begrenzung des Interaktionsraumes 28 identisch.

Zusätzlich kann es vorgesehen sein, dass dem Nutzer 14 auf der Anzeigeeinrichtung 38 der Bedienvorrichtung 20, beispielsweise dem Tablet, welches in der Rückenlehne des Vordersitzes 18 angeordnet ist, die Bestimmungsgeste zum Bestimmen des Interaktionraumes 28 beispielsweise in einer Filmsequenz angezeigt wird. Dem Nutzer 14 wird also eine visuelle Anleitung dazu gegeben, wie er sich seinen persönlichen Interaktionsraum 28 definieren kann.

Somit kann also der Nutzer 14 durch die Bestimmungsgeste sowohl die Lage des Interaktionsraumes 28 in dem Innenraum 12 des Kraftfahrzeugs 10 als auch die Dimension des Interaktionsraumes 28, also die räumlichen Ausdehnungen A1, A2, A3, bestimmen. Darüber hinaus kann, beispielsweise von der Steuereinrichtung 40, ein an den Interaktionsraum 28 angrenzender Toleranzbereich festgelegt werden, wobei die Steuereinrichtung 40 die Funktion F auch dann steuert, wenn von der Erfassungseinrichtung 26 erfasst wurde, dass der Nutzer 14 die Bediengeste zum Steuern der Funktion F beispielsweise außerhalb des Interaktionsraumes 28, aber innerhalb des angrenzenden Toleranzbereiches durchführt.

## Patentansprüche

1. Verfahren zum Betreiben einer Bedienvorrichtung (20) eines Kraftfahrzeugs (10), bei welchem mittels einer Erfassungseinrichtung (26) der Bedienvorrichtung (20) berührungslos eine Bediengeste eines Nutzers (14) sowie zumindest eine räumliche Position, an welcher die Bediengeste durchgeführt wird, erfasst werden und daraufhin eine Funktion (F) des Kraftfahrzeugs (10) in Abhängigkeit der Bediengeste gesteuert wird, falls erfasst wurde, dass die zumindest eine räumliche Position innerhalb eines vorbestimmten Interaktionsraumes (28) liegt, wobei zum Bestimmen des Interaktionsraumes (28) eine durch den Nutzer (14) durchgeführte, vorbestimmte Bestimmungsgeste erkannt wird, zumindest eine Position (P1, P2), an welcher die Bestimmungsgeste durchgeführt wird, erfasst wird und die zumindest eine erfasste Position (P1, P2) der Bestimmungsgeste als eine Koordinate des Interaktionsraumes (28) festgelegt wird,
**dadurch gekennzeichnet, dass**
die Interaktionsraumbestimmung aktiviert wird, sobald eine vorbestimmte Aktivierungslage (34) zweier Hände (22, 24) des Nutzers (14) erkannt wird, als die Bestimmungsgeste eine vorbestimmte Relativbewegung der Hände (22, 24) von der Aktivierungslage (34) in eine Endlage (36) der Hände (22, 24) erfasst wird und als die zumindest eine Position Positionen (P1, P2) der Hände (22, 24) bei der Durchführung der Relativbewegung erfasst werden, wobei die Positionen (P1, P2) der Hände (22, 24) in der Endlage (36) als Koordinaten von äußeren Begrenzungen des Interaktionsraumes (28) festgelegt werden, wobei als die vorbestimmte Relativbewegung ein Auseinanderführen der Hände (22, 24) entlang einer ersten Raumrichtung (R1) von der Aktivierungslage (34), in welcher die Hände (22, 24) einen ersten Abstand zueinander aufweisen, in die Endlage (36), in welcher die Hände (22, 24) einen im Vergleich zum ersten Abstand größeren zweiten Abstand (a) aufweisen, erfasst wird, wobei eine, durch die Positionen (P1, P2) der Hände (20, 22) in der Endlage (36) begrenzte erste räumliche Ausdehnung (A1) des Interaktionsraumes (28) den zweiten Abstand (a) aufweist.

2. Verfahren nach Anspruch 1,
**dadurch gekennzeichnet, dass**
für eine zweite räumliche Ausdehnung (A2) des Interaktionsraumes (28) in einer senkrecht zur ersten Raumrichtung (R1) orientierten zweiten Raumrichtung (R2) der zweite Abstand (a) festgelegt wird und für eine dritte räumliche Ausdehnung (A3) des Interaktionsraumes (28) in einer senkrecht zu der ersten und der zweiten Raumrichtung (R1, R2) orientierten dritten Raumrichtung (R3) der zweite Abstand (a) festgelegt wird.

3. Verfahren nach Anspruch 1 oder 2,
**dadurch gekennzeichnet, dass**
als die Aktivierungslage (34) eine Berührung von Handflächen (30, 32) der Hände (22, 24) und/oder ein Berühren zumindest zweier Fingern der einen Hand (22) mit zumindest zwei Fingern der anderen Hand (24) erkannt wird.

4. Verfahren nach einem der vorhergehenden Ansprüche,
**dadurch gekennzeichnet, dass**
dem Nutzer (14) auf einer Anzeigeeinrichtung (38) der Bedienvorrichtung (20) bildhaft die zum Festlegen des Interaktionsraumes (28) durchzuführende Bestimmungsgeste angezeigt wird.

5. Verfahren nach einem der vorhergehenden Ansprüche,
**dadurch gekennzeichnet, dass**
ein unmittelbar an den Interaktionsraum (28) angrenzender Toleranzbereich festgelegt wird und die Funktion (F) gesteuert wird, falls die Bediengeste innerhalb des Interaktionsraumes (28) und/oder innerhalb des Toleranzbereiches durchgeführt wird.

6. Verfahren nach einem der vorhergehenden Ansprüche,
**dadurch gekennzeichnet, dass**
bei der Erfassung einer weiteren Bestimmungsgeste ein neuer Interaktionsraum (28) bestimmt wird, wobei die Funktion (F) nur gesteuert wird, wenn die Bediengeste in dem neuen Interaktionsraum (28) durchgeführt wird.

7. Verfahren nach einem der vorhergehenden Ansprüche,
**dadurch gekennzeichnet, dass**
zum Bereitstellen eines personalisierten Interaktionsraumes (28) zusätzlich zur Bestimmungsgeste der die Bestimmungsgeste durchführende Nutzer (14) erfasst wird und für jeden Nutzer (14) der durch ihn bestimmte, personalisierte Interaktionsraum (28) zum Steuern der Funktion (F) gespeichert wird.

8. Bedienvorrichtung (20) für ein Kraftfahrzeug (10) zum Steuern einer Funktion (F) des Kraftfahrzeugs (10) mit einer Erfassungseinrichtung (26) zum Erfassen einer Bediengeste eines Nutzers (14) sowie zumindest einer räumlichen Position der Bediengeste und einer Steuereinrichtung (40) zum Steuern der Funktion (F) in Abhängigkeit der durchgeführten Bediengeste, wobei die Steuereinrichtung (40) dazu ausgelegt ist, die Funktion (F) nur zu steuern, falls die zumindest eine durch die Erfassungseinrichtung (26) erfasste Position innerhalb eines vorbestimmten Interaktionsraumes (28) liegt, und die Erfassungseinrichtung (26) dazu ausgelegt ist, eine durch den Nutzer (14) durchgeführte, vorbestimmte Bestimmungsgeste zum Bestimmen des Interaktionsraumes (28) zu erkennen und zumindest eine Position (P1, P2), an welcher die Bestimmungsgeste durchgeführt wird, zu erfassen, und die Steuereinrichtung (40) dazu ausgelegt ist, die zumindest eine erfasste Position (P1, P2) der Bestimmungsgeste als eine Koordinate des Interaktionsraumes (28) festzulegen,
**dadurch gekennzeichnet, dass**
die Steuereinrichtung dazu ausgelegt ist, die Interaktionsraumbestimmung zu aktivieren, sobald eine vorbestimmte Aktivierungslage (34) zweier Hände (22, 24) der Nutzers (14) durch die Erfassungseinrichtung (26) erkannt wird, als die Bestimmungsgeste eine vorbestimmte Relativbewegung der Hände (22, 24) von der Aktivierungslage (34) in eine Endlage (36) der Hände (22, 24) erfasst wird und als die zumindest eine Position Positionen (P1, P2) der Hände (22, 24) bei der Durchführung der Relativbewegung erfasst werden, wobei die Steuereinrichtung dazu ausgelegt ist, die Positionen (P1, P2) der Hände (22, 24) in der Endlage (36) als Koordinaten von äußeren Begrenzungen des Interaktionsraumes (28) festzulegen, wobei die Erfassungseinrichtung (26) dazu ausgelegt ist, als die vorbestimmte Relativbewegung ein Auseinanderführen der Hände (22, 24) entlang einer ersten Raumrichtung (R1) von der Aktivierungslage (34), in welcher die Hände (22, 24) einen ersten Abstand zueinander aufweisen, in die Endlage (36), in welcher die Hände (22, 24) einen im Vergleich zum ersten Abstand größeren zweiten Abstand (a) aufweisen, zu erfassen, wobei eine, durch die Positionen (P1, P2) der Hände (20, 22) in der Endlage (36) begrenzte erste räumliche Ausdehnung (A1) des Interaktionsraumes (28) den zweiten Abstand (a) aufweist.

## Claims

1. Method for operating an operator control device (20) of a motor vehicle (10), wherein an operator control gesture of a user (14) and at least one spatial position at which the operator control gesture is made are sensed in a contactless fashion by a sensing device (26) of the operator control device (20), and a function (F) of the motor vehicle (10) is then controlled based on the operator control gesture if it has been detected that the at least one spatial position lies within a predetermined interaction space (28), wherein, to determine the interaction space (28), a predetermined determining gesture made by the user (14) is detected, at least one position (P1, P2) at which the determining gesture is made is detected, and the at least one sensed position (P1, P2) of the determining gesture is defined as a coordinate of the interaction space (28),
**characterised in that**
the determination of the interaction space is activated as soon as a predetermined activation position (34) of two hands (22, 24) of the user (14) is detected, a predetermined relative movement of the hands (22, 24) from the activation position (34) into an end position (36) of the hands (22, 24) is sensed as the determining gesture, and positions (P1, P2) of the hands (22, 24) when the relative movement is made are sensed as the at least one position, wherein the positions (P1, P2) of the hands (22, 24) in the end position (36) are defined as coordinates of outer boundaries of the interaction space (28), wherein a movement apart of the hands (22, 24) in a first spatial direction (R1) from the activation position (34), in which the hands (22, 24) have a first distance between each other, into the end position (36), in which the hands (22, 24) have a second distance (a) between each other larger than the first distance, is sensed as the predetermined relative movement, wherein a first spatial extent (A1) of the interaction space (28), bounded by the positions (P1, P2) of the hands (20, 22) in the end position (36), has the second distance (a).

2. Method according to claim 1,
**characterised in that**
the second distance (a) defines a second spatial extent (A2) of the interaction space (28) in a second spatial direction (R2) oriented perpendicularly to the first spatial direction (R1), and the second distance (a) defines a third spatial extent (A3) of the interaction space (28) in a third spatial direction (R3) oriented perpendicularly to the first and second spatial directions (R1, R2).

3. Method according to claim 1 or 2,
**characterised in that**
contact between surfaces (30, 32) of the hands (22, 24) and/or contact between at least two fingers of one hand (22) and at least two fingers of the other hand (24) is detected as the activation position (34).

4. Method according to any of the preceding claims,
**characterised in that**
the determining gesture to be made in order to define the interaction space (28) is displayed pictorially to the user (14) on a display device (38) of the operator control device (20).

5. Method according to any of the preceding claims,
**characterised in that**
a tolerance range directly adjoining the interaction space (28) is defined and the function (F) is controlled if the operator control gesture is made within the interaction space (28) and/or within the tolerance range.

6. Method according to any of the preceding claims,
**characterised in that**
when a further determining gesture is sensed, a new interaction space (28) is determined, wherein the function (F) is only controlled when the operator control gesture is made in the new interaction space (28).

7. Method according to any of the preceding claims,
**characterised in that**
in order to provide a personalised interaction space (28), the user (14) is sensed making the determining gesture, and the personalised interaction space (28) determined by each user (14) for controlling the function (F) is stored.

8. Operator control device (20) of a motor vehicle (10) for controlling a function (F) of the motor vehicle (10), with a sensing device (26) for sensing an operator control gesture of a user (14) and at least one spatial position of the operator control gesture and a control device (40) for controlling the function (F) based on the operator control gesture made, wherein the control device (40) is configured to control the function (F) only if the at least one position sensed by the sensing device (26) lies within a predetermined interaction space (28), and the sensing device (26) is configured to detect a predetermined determining gesture made by the user (14) in order to determine the interaction space (28) and to sense at least one position (P1, P2) at which the determining gesture is made, and the control device (40) is configured to define the at least one position (P1, P2) of the determining gesture as a coordinate of the interaction space (28),
**characterised in that**
the control device is configured to activate the determination of the interaction space as soon as a predetermined activation position (34) of two hands (22, 24) of the user (14) is detected by the sensing device (26), a predetermined relative movement of the hands (22, 24) from the activation position (34) into an end position (36) of the hands (22, 24) is sensed as the determining gesture, and positions (P1, P2) of the hands (22, 24) when the relative movement is made are sensed as the at least one position, wherein the control device is configured to define the positions (P1, P2) of the hands (22, 24) in the end position (36) as coordinates of outer boundaries of the interaction space (28), wherein the sensing device (26) is configured to sense a movement apart of the hands (22, 24) in a first spatial direction (R1) from the activation position (34), in which the hands (22, 24) have a first distance between each other, into the end position (36), in which the hands (22, 24) have a second distance (a) between each other larger than the first distance, as the predetermined relative movement, wherein a first spatial extent (A1) of the interaction space (28), bounded by the positions (P1, P2) of the hands (20, 22) in the end position (36), has the second distance (a).

## Revendications

1. Procédé d'utilisation d'un dispositif de commande (20) d'un véhicule à moteur (10), dans lequel un geste de commande d'un utilisateur (14) ainsi qu'au moins une position spatiale au niveau de laquelle le geste de commande est réalisé sont détectés sans contact au moyen d'un dispositif de détection (26) du dispositif de commande (20), puis une fonction (F) du véhicule à moteur (10) est pilotée en fonction du geste de commande s'il a été détecté que la au moins une position spatiale se trouve à l'intérieur d'un espace d'interaction (28) prédéfini, dans lequel un geste de définition prédéfini réalisé par l'utilisateur (14) est identifié afin de définir l'espace d'interaction (28), au moins une position (P1, P2), au niveau de laquelle le geste de définition est réalisé, est détectée et la au moins une position (P1, P2) détectée du geste de définition est considérée comme étant une coordonnée de l'espace d'interaction (28),
**caractérisé en ce que**
la définition d'espace d'interaction est activée dès qu'une disposition d'activation (34) prédéfinie des deux mains (22, 24) de l'utilisateur (14) est identifiée, qu'un déplacement relatif prédéfini des mains (22, 24) à partir de la disposition d'activation (34) jusqu'à une disposition finale (36) des mains (22, 24) est détecté comme étant le geste de définition, et que des positions (P1, P2) des mains (22, 24) sont détectées lors de la mise en oeuvre du déplacement relatif comme étant la au moins une position, dans lequel les positions (P1, P2) des mains (22, 24) dans la disposition finale (36) sont considérées comme étant des coordonnées de limites extérieures de l'espace d'interaction (28), dans lequel un écartement des mains (22, 24), s'effectuant le long d'une première direction spatiale (R1) à partir de la disposition d'activation (34) au sein de laquelle les mains (22, 24) présentent une première distance l'une par rapport à l'autre jusqu'à la position finale (36) au sein de laquelle les mains (22, 24) présentent une seconde distance (a) supérieure à la première distance, est détecté, dans lequel une première extension spatiale (A1) de l'espace d'interaction (28), délimitée par les positions (P1, P2) des mains (20, 22) dans la disposition finale (36), présente la seconde distance (a).

2. Procédé selon la revendication 1,
**caractérisé en ce que**
la seconde distance (a) est déterminée pour une deuxième extension spatiale (A2) de l'espace d'interaction (28) dans une deuxième direction spatiale (R2) orientée perpendiculairement à la première direction spatiale (R1), et la seconde distance (a) est déterminée pour une troisième extension spatiale (A3) de l'espace d'interaction (28) dans une troisième direction spatiale (R3) orientée perpendiculairement aux première et deuxième directions spatiales (R1, R2).

3. Procédé selon la revendication 1 ou 2,
**caractérisé en ce que**
un contact des paumes (30, 32) des mains (22, 24) et/ou un contact d'au moins deux doigts d'une main (22) avec au moins deux doigts de l'autre main (24) est identifié comme étant la disposition d'activation (34).

4. Procédé selon l'une quelconque des revendications précédentes,
**caractérisé en ce que**
le geste de définition à réaliser pour définir l'espace d'interaction (28) est indiqué de manière graphique à l'utilisateur (14) sur un dispositif d'affichage (38) du dispositif de commande (20).

5. Procédé selon l'une quelconque des revendications précédentes,
**caractérisé en ce que**
une zone de tolérance contiguë à l'espace d'interaction (28) est déterminée et la fonction (F) est pilotée si le geste de commande est réalisé à l'intérieur de l'espace d'interaction (28) et/ou à l'intérieur de la zone de tolérance.

6. Procédé selon l'une quelconque des revendications précédentes,
**caractérisé en ce que**
un nouvel espace d'interaction (28) est défini lors de la détection d'un autre geste de définition, dans lequel la fonction (F) n'est pilotée que lorsque le geste de commande est réalisé dans le nouvel espace d'interaction (28).

7. Procédé selon l'une quelconque des revendications précédentes,
**caractérisé en ce que**
l'utilisateur (14) réalisant le geste de définition est détecté en plus du geste de définition afin de fournir un espace d'interaction (28) personnalisé, et un espace d'interaction (28) personnalisé défini par un utilisateur (14) respectif est mémorisé pour ledit utilisateur afin de piloter la fonction (F).

8. Dispositif de commande (20) pour un véhicule à moteur (10), destiné à piloter une fonction (F) du véhicule à moteur (10) et muni d'un dispositif de détection (26) permettant de détecter un geste de définition d'un utilisateur (14) ainsi qu'au moins une position spatiale du geste de définition et un dispositif de pilotage (40) destiné à piloter la fonction (F) en fonction du geste de commande réalisé, dans lequel le dispositif de pilotage (40) est conçu pour ne piloter la fonction (F) que si la au moins une position détectée par le dispositif de détection (26) se trouve à l'intérieur d'un espace d'interaction (28) prédéfini, et le dispositif de détection (26) est conçu pour identifier un geste de définition prédéfini réalisé par l'utilisateur (14) afin de définir l'espace d'interaction (28) et pour détecter au moins une position (P1, P2) au niveau de laquelle le geste de définition est réalisé, et le dispositif de pilotage (40) est conçu pour considérer la au moins une position (P1, P2) détectée du geste de définition comme étant une coordonnée de l'espace d'interaction (28),
**caractérisé en ce que**
le dispositif de pilotage est conçu pour activer la définition d'espace d'interaction dès qu'une disposition d'activation (34) prédéfinie des deux mains (22, 24) de l'utilisateur (14) est identifiée par le dispositif de détection (26), qu'un déplacement relatif prédéfini des mains (22, 24) à partir de la disposition d'activation (34) jusqu'à une disposition finale (36) des mains (22, 24) est détecté comme étant le geste de définition, et que des positions (P1, P2) des mains (22, 24) sont détectées lors de la mise en oeuvre du déplacement relatif comme étant la au moins une position, dans lequel le dispositif de pilotage est conçu pour considérer les positions (P1, P2) des mains (22, 24) dans la disposition finale (36) comme étant des coordonnées de limites extérieures de l'espace d'interaction (28), dans lequel le dispositif de détection (26) est conçu pour détecter un écartement des mains (22, 24) s'effectuant le long d'une première direction spatiale (R1) à partir de la disposition d'activation (34) au sein de laquelle les mains (22, 24) présentent une première distance l'une par rapport à l'autre jusqu'à la position finale (36) au sein de laquelle les mains (22, 24) présentent une seconde distance (a) supérieure à la première distance, dans lequel une première extension spatiale (A1) de l'espace d'interaction (28), délimitée par les positions (P1, P2) des mains (20, 22) dans la disposition finale (36), présente la seconde distance (a).
